# DEMANDE DE BREVET EUROPEEN

(11) **EP 1 767 792 A2**
(43) Date de publication de la demande: **28.03.2007**
(21) Numéro de dépôt: 06120303.0
(22) Date de dépôt: 07.09.2006
(51) Int. Cl.: F16B 5/04, F16B 5/08

(54) **Dispositif d'assemblage entre deux plaques stratifiées composées d'une couche de résine interposée entre deux tôles métalliques**

(30) Priorité: 26.09.2005 FR 0509820
(71) Demandeur: Valeo Systèmes Thermiques, 78321 Le Mesnil St Denis Cedex (FR)
(72) Inventeur: Droulez, Eric, 92150, Suresnes (FR); Paitrault, Thibaut, 78120, Rambouillet (FR); Truillet, Franck, 28410, Bu (FR); Pouysegur, Serge, 78610, Le Perray en Yvelines (FR)
(74) Mandataire: Léveillé, Christophe

(57) **Abrégé**

L'invention a pour objet un dispositif d'assemblage entre deux plaques (4,5) composées d'une couche interne (1) de résine interposée entre deux tôles externes métalliques (2,3). L'une au moins des plaques (4,5) comporte une découpe (6) pour le passage de moyens de fixation conjointement en prise sur une tôle (2,3) de l'une des plaques (4,5) et sur une tôle (2,3) de l'autre plaque (4,5).

## Description

### Domaine technique de l'invention.

La présente invention est du domaine de l'assemblage l'une à l'autre de deux plaques stratifiées. Elle a pour objet un dispositif d'assemblage entre deux plaques, l'une au moins de ces plaques étant composée d'au moins une couche interne de résine interposée entre deux tôles externes métalliques, l'autre plaque comprenant au moins une tôle métallique, le cas échéant externe.

### Etat de la technique.

On connaît un matériau en plaque stratifié composé de plusieurs couches superposées, dont au moins une couche interne de résine interposée entre deux tôles externes métalliques. Un tel matériau est notamment utilisé dans le domaine automobile, en raison des caractéristiques mécaniques offertes au regard des contraintes liées à ce domaine, notamment en ce qui concerne la légèreté et la résistance mécanique et thermique.

Se pose le problème de l'assemblage entre un tel matériau en plaque et un autre matériau similaire, voire un autre matériau comportant au moins une tôle métallique, le cas échéant externe, voire une tôle métallique monolithique. Plus particulièrement, l'assemblage réalisé doit conférer au produit obtenu des qualités de résistances mécaniques recherchées, notamment dans le domaine automobile, et notamment une résistance aux vibrations et aux chocs en cas d'accident. En outre, les modalités d'assemblage mises en oeuvre ne doivent pas porter atteinte aux qualités intrinsèques du matériau, ni n'induire de déformation de celui-ci, tant de surface que dans son plan général. Enfin, les modalités d'assemblage mises en oeuvre doivent éviter d'être une source de pollution du produit obtenu.

Par ailleurs, l'assemblage doit être efficace et pérenne, malgré une mise en situation du produit obtenu en milieu vibratoire. Il est aussi recherché des modalités d'assemblage dont l'industrialisation soit aisée à mettre en oeuvre, notamment selon des procédés précis, flexibles et adaptable à un quelconque produit à obtenir, facilement reproductibles, limitant les travaux de préparation des plaques et évitant un échauffement de la couche interne de résine.

Il est connu des dispositifs d'assemblage entre deux plaques de matériaux stratifiés susvisés, mettant en oeuvre des techniques de soudage des plaques entre elles. Les procédés de soudage, tels que soudage par point ou soudage à l'arc, ne sont pas adaptés, en raison de la présence de la couche interne de résine qui s'oppose au passage du courant électrique destiné à chauffer les tôles métalliques. Dans le cas où le procédé utilisé permet un contact électrique entre les tôles métalliques, l'échauffement provoque la fusion de la résine et un dégazage de cette dernière qui perturbe l'opération de soudage et qui altère le matériau. On pourra par exemple se reporter aux documents DE3326612 (ALUSUISSE) et US4482600 (KAWASAKI).

Il est aussi connu des dispositifs d'assemblage entre deux plaques de matériaux stratifiés susvisés, mettant en oeuvre des techniques de rivetage ou de vissage. Plus particulièrement, des avant-trous sont ménagés à travers l'une des plaques et l'une des tôles externes de l'autre plaque, pour l'introduction d'un rivet. Ce rivet est soumis à contrainte pour se déformer en expansion à l'intérieur de la couche interne de résine. On pourra par exemple se reporter au document DE19540904 (MITSUBISHI). Plus particulièrement encore, il est connu d'exploiter des rivets ou un sertissage pour maintenir les plaques l'une par rapport à l'autre lors d'une opération de collage de ces plaques entre elles. De telles techniques n'offrent cependant pas toutes les qualités requises pour le produit obtenu, en ce qui concerne sa fiabilité et sa pérennité dans l'application au domaine automobile notamment, ni en ce qui concerne l'aisance de l'industrialisation de leur mise en oeuvre.

### Objet de l'invention.

Le but de la présente invention est de proposer un dispositif d'assemblage entre deux plaques, l'une au moins de ces plaques étant composée d'au moins une couche interne de résine interposée entre deux tôles externes métalliques, l'autre plaque comprenant au moins une tôle métallique, le cas échéant externe, voire étant constituée d'une tôle métallique monolithique. Il est plus particulièrement proposé un tel dispositif qui réponde aux contraintes et difficultés qui ont été exposées.

Le dispositif de la présente invention est un dispositif d'assemblage entre au moins deux plaques. L'une au moins de ces plaques est composée d'au moins une couche interne interposée entre deux tôles externes métalliques. La couche interne est préférentiellement réalisée à partir d'un matériau électriquement isolant, telle qu'une résine ou analogue. L'autre plaque comprend au moins une tôle métallique, voire une tôle métallique unique extérieure. Cette autre plaque peut aussi être constituée d'une tôle métallique monolithique.

Selon la présente invention, un tel dispositif d'assemblage est principalement reconnaissable en ce que l'une au moins des plaques comporte une découpe pour le passage de moyens de fixation conjointement en prise sur une tôle de l'une des plaques et sur une tôle de l'autre plaque.

Selon une forme de réalisation, les moyens de fixation sont constitués d'un organe de poinçonnage formant la découpe et comportant à ses extrémités respectives une tête d'appui sur la tôle extérieure de l'une des plaques et au moins un rabat contre la tôle extérieure de l'autre plaque après traversée des plaques.

L'organe de poinçonnage est par exemple constitué d'un pion à extrémité perforante, le rabat étant formé par un écrasement de ladite extrémité.

Par exemple encore, l'organe de poinçonnage est évidé. Le rabat est dans ce cas formé par un écrasement vers l'extérieur de l'extrémité perforante.

L'évidement de l'organe de poinçonnage constitue avantageusement une chambre de réception de la matière des plaques découpée et comprimée vers l'intérieur de l'évidement de l'organe de poinçonnage.

L'évidement de l'organe de poinçonnage est susceptible d'être débouchant à travers la tête d'appui, et de constituer avantageusement un couloir d'éjection de la matière découpée des plaques.

Par exemple encore, l'organe de poinçonnage est constitué d'une agrafe comportant au moins deux pattes perforantes dont les extrémités sont repliées pour former un rabat, indifféremment vers l'extérieur et/ou l'intérieur.

Toujours selon la présente invention, un procédé de mise en oeuvre d'un dispositif d'assemblage tel que précédemment proposé, consiste à maintenir les plaques en position relative de superposition, à positionner l'organe de poinçonnage et à appliquer contre la tête d'appui une poussée pour provoquer une traversée perforante des plaques par l'organe de poinçonnage et former la découpe, puis à écraser au moyen d'un premier outil l'extrémité perforante de l'organe de poinçonnage pour former le rabat.

Le cas échéant, le premier outil comporte un relief de mise en compression de la matière découpée des plaques contre la face interne de la tête.

Le cas échéant encore, un deuxième outil est équipé d'une tige de traversée du couloir pour l'éjection de la matière découpée des plaques.

Selon une autre forme de réalisation, les moyens de fixation sont constitués d'au moins une platine placée en superposition contre une tôle métallique extérieure d'une première plaque. Cette platine comporte au moins un organe de liaison traversant au moins partiellement la découpe vers l'une quelconque des tôles métalliques d'une deuxième plaque, pour sa fixation à cette dernière.

L'organe de liaison est par exemple constitué d'une languette issue de la platine par découpage. Cette languette est rabattue à travers la découpe vers la tôle métallique extérieure de la deuxième plaque, et comporte un repli de prise d'appui contre la face extérieure de la tôle métallique extérieure de cette plaque.

Une platine est susceptible d'être placée en superposition contre chacune des plaques, le repli de la languette de l'une quelconque des platines étant dans ce cas plaquée contre la face extérieure de l'autre platine.

Par exemple encore, l'organe de liaison est constitué d'un relief que comporte la platine, et notamment issu de cette dernière. Ce relief s'étend partiellement à travers la découpe vers la tôle intérieure de la deuxième plaque. Les moyens de fixation sont constitués par un joint de soudure entre la tôle intérieure de la deuxième plaque et le fond du relief.

Selon une autre forme de réalisation, les moyens de fixation sont constitués d'organes coopérants en appui contre la tôle métallique extérieure d'une plaque respective. L'un au moins de ces organes traverse au moins partiellement la découpe pour sa mise en relation avec l'autre organe.

Les organes coopérants, en acier notamment, sont préférentiellement fixés l'un à l'autre par soudage.

Par exemple, les organes coopérants sont chacun constitués d'un corps épaulé, les épaulements prenant appui contre la face extérieure de la tôle métallique extérieure correspondante. Les corps sont logés au moins partiellement à l'intérieur de la découpe et sont soudés l'un à l'autre.

Plus particulièrement, les organes coopérants sont susceptibles d'être globalement conformés en cuvette à rebord, et d'être soudés l'un à l'autre par l'intermédiaire de leur fond.

Toujours selon la présente l'invention, un procédé de mise en oeuvre d'un dispositif d'assemblage tel que précédemment proposé consiste à ménager préalablement les découpes et à former les organes coopérants à partir de platines placées contre une plaque respective. Ces platines sont embouties par des électrodes de soudage, pour leur mise en conformation en cuvette à rebord et leur soudage l'une à l'autre.

Plus particulièrement encore, le corps de l'un au moins des organes est susceptible de comporter une surface à portée conique d'appui de l'autre corps. Cette surface est notamment une surface intermédiaire de soudage des corps l'un à l'autre.

De préférence, un premier corps comporte une première surface à portée conique, tandis qu'un deuxième corps comporte une deuxième surface à portée conique complémentaire, qui est formée par écrasement d'une arête du deuxième corps par l'intermédiaire de la première surface conique.

Toujours selon la présente l'invention, un procédé de mise en oeuvre d'un dispositif d'assemblage tel que précédemment proposé consiste à ménager préalablement les découpes, et à placer les organes coopérants de part et d'autre des plaques en disposant les corps au moins partiellement à l'intérieur de la découpe, puis à exercer une poussée et contre poussée axiale contre les organes coopérants au moyen d'électrodes pour provoquer la mise en appui des organes coopérants contre la tôle extérieure correspondante et l'écrasement de ladite arrête, ainsi que leur soudage l'un à l'autre.

Par exemple encore, les organes coopérants sont constitués d'un jeu de platines placées en superposition contre une tôle métallique extérieure d'une plaque respective. Ces platines comportent chacune au moins une languette issue des platines par découpage et rabattue à travers la découpe vers une languette de l'autre platine. Ces languettes comportent un retour d'appui contre le retour de l'autre languette, par l'intermédiaire desquels retours les languettes sont soudées l'une à l'autre.

Toujours selon la présente l'invention, un procédé de mise en oeuvre d'un dispositif d'assemblage tel que précédemment proposé, consiste à ménager préalablement les découpes, à placer les platines contre la plaque correspondante, puis à emboutir les platines au moyen d'électrodes pour déformer les languettes et les souder l'une à l'autre.

Par exemple encore, les organes coopérants sont constitués pour l'un d'un organe de poinçonnage des plaques et pour l'autre d'un organe de réception de l'extrémité émergeante hors des plaques de l'organe de poinçonnage.

Un tel organe de poinçonnage est susceptible d'être constitué d'un pion à tête et à pointe perforante, l'organe de réception étant constitué d'une cuvette à rebord.

La pointe perforante et la cuvette comportent de préférence des surfaces d'appui à portée conique, par l'intermédiaire desquelles le pion et la cuvette sont soudés l'un à l'autre.

L'organe de poinçonnage est susceptible d'être axialement évidé. Cet évidement constitue un couloir d'éjection de la matière découpée des plaques.

Selon une autre forme de réalisation, l'une quelconque au moins des plaques comporte la découpe ménagée à son travers. Les moyens de fixation sont constitués par un joint de soudure bordant la périphérie de la découpe, en reliant l'une à l'autre les tôles métalliques intérieures superposées des plaques.

Par exemple, la découpe est formée d'une lumière ménagée à travers la plaque.

Par exemple encore, la découpe est ménagée en bordure de l'une des plaques.

La conformation du bord de la découpe est préférentiellement de forme irrégulière, telle que sinusoïdale ou analogue notamment. Le bord de la découpe comporte de préférence un retour ménagé par déformation de la plaque correspondante, notamment réalisée lors de l'opération de découpe.

Selon une autre forme de réalisation, une première des plaques comporte au moins une découpe ménagée dans sa tranche pour former au moins un relief d'emboîtement à l'intérieur d'une découpe ménagée à travers une deuxième plaque. Les moyens de fixation sont constitués d'au moins un joint de soudure réalisé en bordure d'une partie du relief qui émerge hors de la découpe ménagée à travers la deuxième plaque. Ces dispositions sont plus particulièrement destinées à l'assemblage de plaques transversalement l'une par rapport à l'autre, orthogonalement notamment. Les joints de soudure sont éventuellement ménagés le long de chacun des débouchés de la découpe.

### Description des figures.

La présente invention sera mieux comprise, et des détails en relevant apparaîtront, à la lecture de la description qui va en être faite en relation avec les figures des planches annexées, dans lesquelles :
La fig.1 est un schéma illustrant un exemple de réalisation d'un couple de plaques en matériau stratifié, destinées à être assemblées entre elles au moyen d'un dispositif d'assemblage de l'invention.
Les fig.2 à fig.4 sont des schémas illustrant un premier mode d'assemblage entre deux plaques au moyen d'un dispositif de l'invention.
Les fig.5 à fig.7 sont des schémas illustrant un deuxième mode d'assemblage entre deux plaques au moyen d'un dispositif de l'invention.
Les fig.8 et fig.9 sont des schémas illustrant un troisième mode d'assemblage entre deux plaques au moyen d'un dispositif de l'invention.
Les fig.10 à fig.12 sont des schémas illustrant un quatrième mode d'assemblage entre deux plaques au moyen d'un dispositif de l'invention.
La fig.13 est un schéma illustrant une variante des modalités d'assemblage représentées sur les fig.10 à fig.12.
Les fig.14 à fig.19 sont des schémas illustrant deux variantes d'un cinquième mode d'assemblage entre deux plaques au moyen d'un dispositif de l'invention
Les fig.20 à fig.25 sont des schémas illustrant deux variantes d'un sixième mode d'assemblage entre deux plaques au moyen d'un dispositif de l'invention.
Les fig.26 à fig.29 sont des schémas illustrant un septième mode d'assemblage entre deux plaques au moyen d'un dispositif de l'invention.
Les fig.30 et fig.31 sont des schémas illustrant un huitième mode d'assemblage entre deux plaques au moyen d'un dispositif de l'invention.
Les fig.32 à fig.34 sont des schémas illustrant un neuvième mode d'assemblage entre deux plaques au moyen d'un dispositif de l'invention.
Les fig.35 et fig.36 sont des schémas illustrant un dixième mode d'assemblage entre deux plaques au moyen d'un dispositif de l'invention.
Les fig.37 et fig.38 sont des schémas illustrant un onzième mode d'assemblage entre deux plaques au moyen d'un dispositif de l'invention.
Les fig.39 et fig.40 sont des schémas illustrant un douzième mode d'assemblage entre deux plaques au moyen d'un dispositif de l'invention.
La fig.41 est un schéma illustrant un treizième mode d'assemblage entre deux plaques au moyen d'un dispositif de l'invention.
Les fig.42 à fig.43 sont des schémas illustrant un quatorzième mode d'assemblage entre deux plaques au moyen d'un dispositif de l'invention.
La fig.44 est un schéma illustrant un quinzième mode d'assemblage entre deux plaques au moyen d'un dispositif de l'invention.

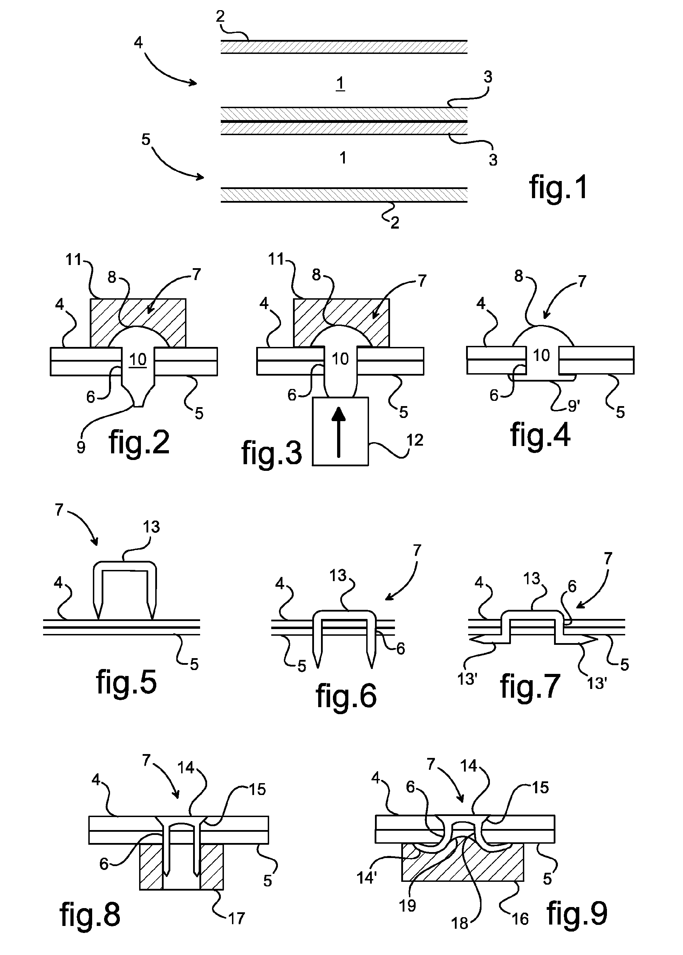

Sur la fig.1, un matériau stratifié est composé d'une couche interne en résine (1), interposée entre deux tôles externes métalliques (2,3). Ce matériau est conditionné en plaque, deux plaques (4,5) étant susceptibles d'être assemblées l'une à l'autre pour former un produit, notamment utilisé dans le domaine automobile. Les plaques (4,5) étant superposées tel que sur le schéma représenté, ces plaques (4,5) comportent une tôle extérieure (2) et une tôle intérieure (3), les tôles intérieures (3) des plaques superposées (4,5) étant juxtaposées. De manière analogue, un tel assemblage est susceptible d'être réalisé entre un tel matériau et une tôle métallique monolithique, ou encore entre un tel matériau et un autre matériau stratifié comportant au moins une couche extérieure formée d'une tôle métallique.

Selon l'invention proposée, au moins l'une des plaques (4,5) comporte une découpe pour le passage de moyens de fixation en prise sur une tôle métallique (2,3) de l'une et l'autre des plaques (4,5), cette tôle métallique pouvant être une tôle métallique intérieure (3) ou une tôle métallique extérieure (2).

Sur les fig.2 à fig.19, il est proposé de ménager la découpe (6) directement lors de la mise en place des moyens de fixation. Un organe de poinçonnage (7) est utilisé non seulement pour pratiquer la découpe (6) à travers l'une et l'autre des plaques (4,5), mais aussi est exploité pour les assembler entre elles, lors d'une même opération de montage. Un tel mode d'assemblage permet de se dispenser d'une opération de découpage des plaques (4,5) préalablement à la mise en place des moyens de fixation des plaques (4,5) entre elles. En outre, l'industrialisation de ce mode d'assemblage est aisée, les découpes (6) ménagées à travers les plaques (4,5) étant pratiquées simultanément, avec pour avantage d'éviter d'avoir à les positionner rigoureusement l'une par rapport à l'autre dans le cas contraire, pour permettre la mise en place des moyens de fixation.

Sur les fig.2 à fig.4, l'organe de poinçonnage (7) est constitué d'un pion (10) à tête (8) et à pointe perforante (9). Sur la fig.4, la tête (8) du pion (10) est en appui contre la tôle extérieure (2) de l'une des plaques (4), tandis que sa pointe (9) est en appui contre la tôle extérieure (2) de l'autre plaque (5), après matage pour former un rabat (9'). Sur la fig.2, ce pion (10) est introduit en force à travers les plaques (4,5) de manière à les perforer et à émerger à son extrémité munie de la pointe (9). Sur la fig.3, une enclume (11) est placée contre la tête (8) du pion (10), tandis qu'un marteau (12) déforme sa pointe (9) jusqu'à la rabattre par écrasement contre la tôle correspondante (2).

Sur les fig.5 à fig.7, l'organe de poinçonnage (7) est constitué d'une agrafe (13) comportant un couple de pattes perforantes dont les extrémités sont repliées pour former des rabats (13'). Les pattes sont susceptibles d'être en nombre supérieur à deux, et peuvent être indifféremment rabattues vers l'intérieur ou vers l'extérieur tel qu'illustré.

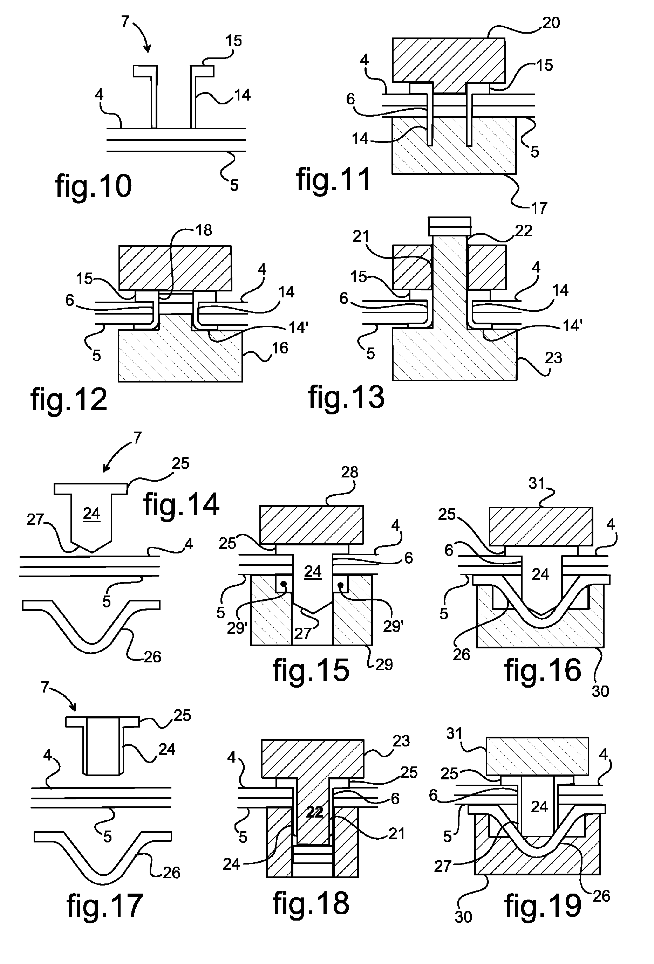

Sur les fig.8 à fig.13, l'organe de poinçonnage (7) est constitué d'un pion (14) axialement évidé. Ce pion (14) comporte une tête (15) d'appui contre la tôle extérieure (2) d'une première plaque (4), son autre extrémité étant écrasée par un outil (16) pour former un rabat (14') contre la tôle extérieure (2) de la deuxième plaque (5). Sur les fig.8 et fig.11, un guide (17) est placé contre la deuxième plaque (5), pour empêcher la déformation des plaques (4,5) lors de l'étape de poinçonnage. Sur les fig.9 et fig.12, la matière découpée est comprimée à l'intérieur de l'évidement du pion (14), qui constitue une chambre (18) de réception de cette matière, et évite que cette dernière ne soit source d'une pollution. L'outil (16) constitue non seulement un organe de rabat de l'extrémité du pion (14), mais aussi un organe de compression de la matière découpée à l'intérieur de la chambre de réception (18). Sur la variante illustrée sur les fig.8 et fig.9, l'évidement interne du pion (14) est obturé par la tête (15). L'outil (16) de rabat de l'extrémité du pion (14) comporte un relief (19) de mise en compression de la matière découpée des plaques (4,5), contre la face interne de la tête (15) du pion (14). Sur la variante illustrée sur les fig.10 à fig.13, l'évidement interne du pion (14) est débouchant à travers la tête (15). Sur la fig.11, le débouché de l'évidement du pion (14) permet le centrage de ce dernier au moyen d'un outil (20). Cet outil (20) comporte un fût de centrage destiné à être logé à l'intérieur de l'évidement du pion (14). Selon des modalités particulières représentées sur la fig.13, l'évidement débouchant du pion (14) est exploité pour former un couloir (21) de passage d'une tige (22) équipant un outil (23) d'éjection de la matière découpée des plaques (4,5). Selon une variante de réalisation, l'outil d'éjection (23) est solidaire de l'outil de rabat (16), voire forme avec ce dernier (16) un outil monobloc.

Sur les fig.14 à fig.19, les moyens de fixation comprennent des organes coopérants. L'un de ces organes est constitué d'un pion (24) à tête (25) de poinçonnage, l'autre organe étant constitué d'une cuvette à rebord (26) pour la réception de l'extrémité perforante (27) du pion (24). Sur les fig.15 et fig.18, un outil de frappe (28) enfonce le pion (24) à travers les plaques (4,5). Une enclume (29) est disposée contre la plaque correspondante (5) pour empêcher une déformation des plaques (4,5). L'enclume (29) comporte un évidement (29'), préférentiellement circulaire, pour permettre le passage d'un reflux de matière issu des plaques (4,5) lors de la mise en place du pion (24). Sur les fig.16 et fig.19, la cuvette à rebord (26) est rapportée en étant maintenue par une première électrode (30). Une deuxième électrode (31) est placée contre la tête (25) du pion (24), pour souder l'un à l'autre le pion (24) et la cuvette (26). Cette opération de soudage est susceptible d'être réalisée par décharge de condensateur par exemple. L'extrémité perforante (27) et la cuvette (26) comportent des surfaces d'appui à portée conique, par l'intermédiaire desquelles elles sont soudées l'une à l'autre. Sur la variante de réalisation représentée sur les fig.14 à fig.16, le pion (24) est plein. Sur la variante de réalisation représentée sur les fig.17 à fig.19, le pion (24) est axialement évidé, l'évidement constituant le cas échéant un couloir (21) de passage d'une tige (22) d'un outil (23) d'éjection de la matière découpée des plaques (4,5), tel que précédemment décrit en relation avec la variante de réalisation représentée sur la fig.13. De telles modalités de fixation des plaques (4,5) entre elles mettant en oeuvre une technique de soudage permet l'obtention d'un assemblage des plaques (4,5) fiable et pérenne, sans que l'opération de soudage n'affecte la couche interne de résine (1).

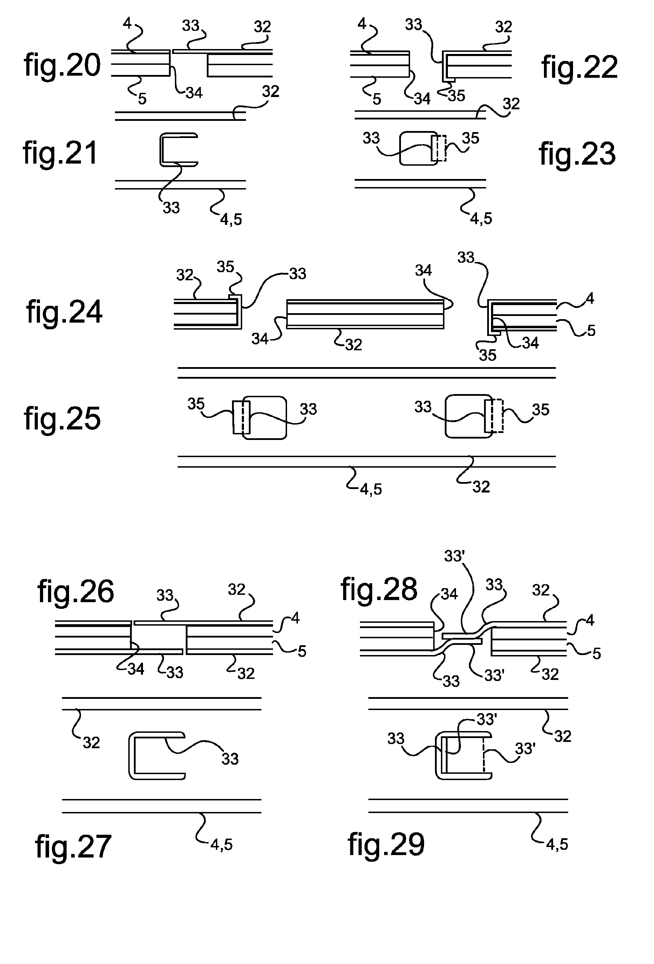

Sur les fig.20 à fig.29, les plaques (4,5) sont assemblées entre elles par l'intermédiaire d'une platine (32) placée en superposition contre une première plaque (4). La platine (32) comporte des languettes (33) formées par découpage et pliage. Les languettes (33) sont susceptibles d'être alignées, ou d'être disposées en quinconce pour un maintien plus équilibré des plaques (4,5) entre elles. Des découpes (34) sont préalablement ménagées à travers les plaques (4,5), pour le passage à leur travers des languettes (33) vers la tôle extérieure (2) de la deuxième plaque (5). Selon la variante de réalisation illustrée sur les fig.20 à fig.23, une seule platine (32) est placée contre l'une des plaques (4), tandis que selon les variantes de réalisation illustrées sur les fig.24 à fig.29, les plaques (4,5) sont munies d'une platine (32) respective, dont les languettes (33) sont rabattues de l'une vers l'autre des plaques (4,5).

Selon les variantes de réalisation respectivement illustrées sur les fig.20 à fig.23, et sur les fig.24 et fig.25, les languettes (33) comportent un repli (35) de prise d'appui contre la face extérieure de la tôle extérieure (2) de la deuxième plaque (5). Sur les fig.24 et fig.25, cette prise d'appui est réalisée par l'intermédiaire de la platine (32) dont est munie la deuxième plaque (5).

Selon la variante de réalisation illustrée sur les fig.26 à fig.29, les platines (32) sont placées en superposition contre une tôle extérieure (2) d'une plaque respective (4,5). Pour chacune des découpes (34) ménagées à travers les plaques (4,5), les languettes (33) d'une platine (32) sont déformées vers les languettes (33) de l'autre platine (32), au moyen d'électrodes non représentées sur les figures. Les languettes (33) sont non seulement déformées pour prendre appui l'une contre l'autre par l'intermédiaire d'un retour (33'), mais aussi sont soudées entre elles sous pression.

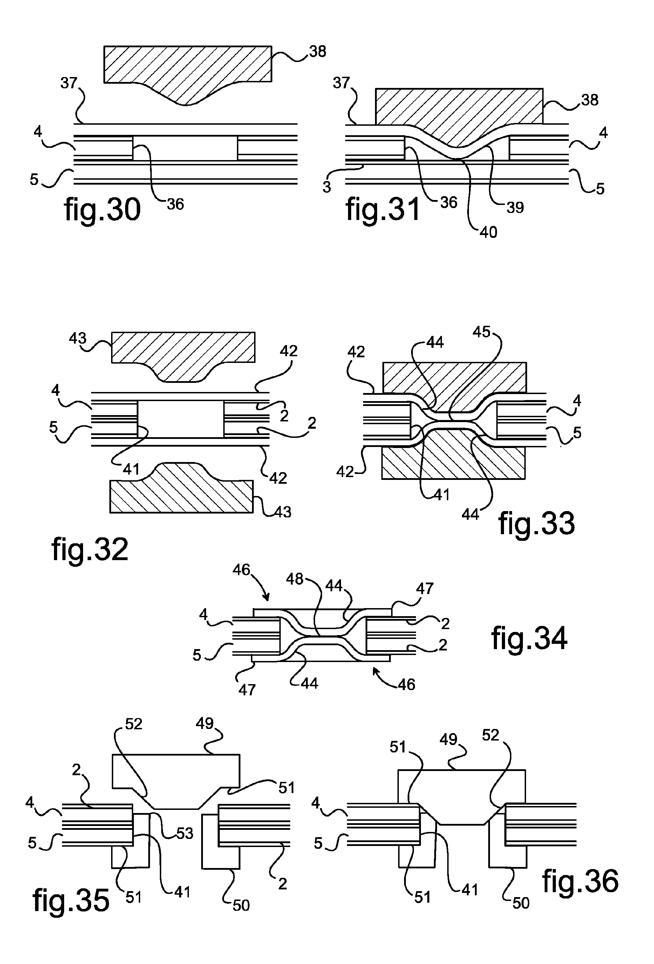

Sur les fig.30 et fig.31, une découpe (36) est ménagée à travers une première plaque (4), et une platine (37) est placée en superposition contre cette plaque (4). Une électrode (38) déforme la platine (37) pour former un relief (39), qui s'étend à travers la découpe (36) jusqu'à la tôle intérieure (3) de la deuxième plaque (5). Le relief (39) est fixé à la tôle intérieure (3) de la deuxième plaque (5) par l'intermédiaire d'un joint de soudure (40). Selon une variante de réalisation, le relief (39) est formé par emboutissage préalablement à la mise en place de la platine (37) contre la première plaque (4).

Sur les fig.32 et fig.33, une découpe (41) est ménagée à travers les deux plaques (4,5). Une platine (42) respective est placée contre la tôle extérieure (2) de chacune des plaques (4,5). Deux électrodes (43) déforment une platine (42) respective pour former des reliefs conformés en cuvette à rebord (44). Ces cuvettes (44) s'étendent à travers la découpe (41) jusqu'à leur mise en contact en zone médiane de cette dernière. Les reliefs (44) sont soudés l'un à l'autre par leur fond au moyen d'un joint de soudure (45).

Sur la fig.34 les platines sont susceptibles d'être remplacées par un jeu de rondelles (46) conformées en cuvette à rebord (44), ou des rondelles incurvées de type belleville par exemple, dont les collerettes (47) prennent respectivement appui contre les tôles extérieures (2) des plaques (4,5). Ces rondelles (46) sont fixées l'une à l'autre par leur fond par l'intermédiaire d'un joint de soudure (48), au moyen d'électrodes non représentées. Selon une variante de réalisation, les rondelles (46) sont planes et sont déformées par des outils et/ou des électrodes, similaires aux électrodes (43) illustrées sur la fig.32, jusqu'à la mise en contact de leur fond.

Sur les fig.35 et fig.36, une découpe (41) est préalablement ménagée à travers les plaques (4,5). Celles-ci sont fixées l'une à l'autre au moyen d'organes coopérants respectivement affectés à chacune des plaques (4,5). L'un de ces organes est formé d'un premier corps plein épaulé (49), l'autre organe étant formé d'un deuxième corps épaulé (50), qui est axialement évidé. Les corps (49,50) prennent appui contre la tôle extérieure (2) de la plaque (4,5) à laquelle ils sont affectés par l'intermédiaire de leur épaulement (51), et s'étendent partiellement à travers la découpe (41), jusqu'à leur mise en contact l'un contre l'autre. Le corps plein (49) comporte une première surface à portée conique (52). Le corps évidé (50) et le corps plein (49) sont successivement introduits à l'intérieur de la découpe (41), puis le corps plein (49) est pressé contre le corps évidé (50) par l'intermédiaire de sa surface à portée conique (52), jusqu'à écrasement de l'arête intérieure (53) de l'extrémité correspondante du corps évidé (50), formant sur ce dernier une deuxième surface à portée conique coopérante avec la première. Cet écrasement est notamment réalisé au moyen d'électrodes affectées à chacun des corps (49,50), pour les fixer l'un à l'autre par soudage sous pression, par décharge de condensateur par exemple.

D'une manière générale pour les différents modes de réalisation représentés sur les fig.26 à fig.36, la pression associée au passage du courant provoque une fusion locale de la matière des éléments en contact l'un contre l'autre, qui crée un joint de soudure. Les zones de pression entre les éléments et les tôles extérieures des plaques contre lesquelles ils prennent respectivement appui, favorisent un assemblage robuste des plaques entre elles. Ce mode d'assemblage est rapide à mettre en oeuvre et provoque un faible dégagement thermique, préservant les plaques et notamment les couches intérieures de résine. En outre, aucune pollution n'est générée. De surcroît, il n'est pas nécessaire d'imposer des tolérances précises de concentricité et de coaxialité de l'une à l'autre des découpes respectivement ménagées à travers les plaques.

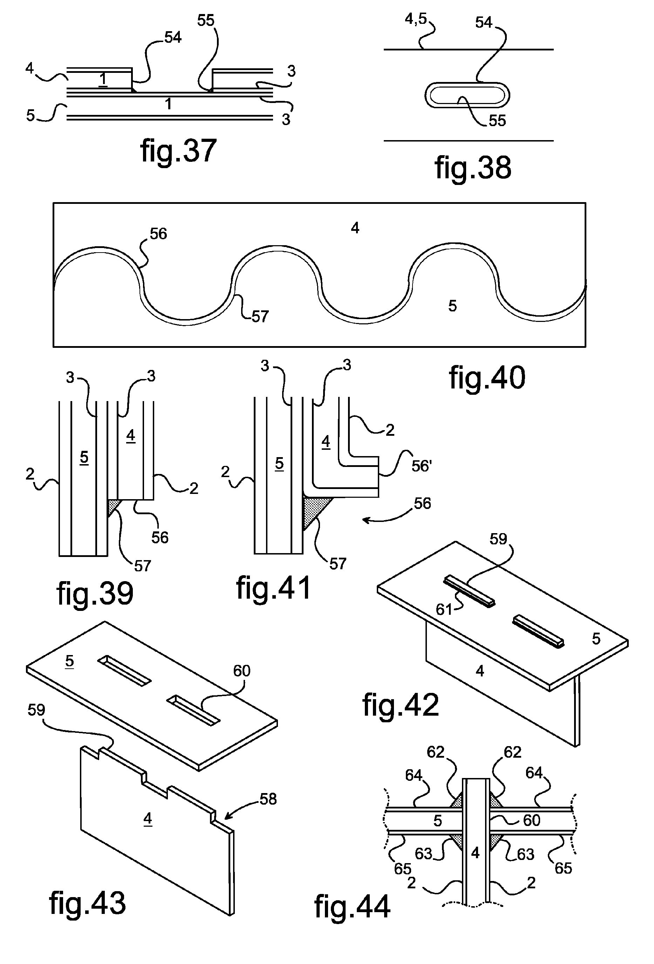

Sur les fig.37 et fig.38, la découpe (54) est ménagée à travers une première plaque (4). Cette découpe (54) est sur l'exemple de réalisation illustré de forme oblongue, mais pourrait présenter une quelconque conformation. Un joint de soudure (55), notamment réalisé par apport de matière, est ménagé en bordure de la découpe (54) en étant en prise sur les tôles intérieures (3) superposées des plaques (4,5). Selon une variante de réalisation, le joint de soudure (55) est obtenu à partir de la fusion des tôles intérieures (3) de chacune des plaques (4,5), sans apport de matière. Dans le cas contraire, l'apport de matière est notamment réalisé par brasage ou soudo-brasage LASER, qui permet d'obtenir une fixation des plaques (4,5) entre elles sans détérioration de la couche interne en résine (1), grâce à la focalisation précise du faisceau LASER sur les zones à souder, et notamment sur les tranches des tôles intérieures (3) des plaques (4,5). De préférence, le faisceau LASER est un faisceau de type YAG, qui est notamment véhiculé par fibre optique. La tête de soudure est préférentiellement installée sur un bras à manoeuvre automatique équipé d'un système de détection et de suivi du joint de soudure (55) pratiqué. La matière d'apport est un métal, préférentiellement de type cuivre-silicium-manganèse ou du type cuivre-étain par exemple, pour permettre une fusion basse température de la matière d'apport. Les découpes (54) sont susceptibles d'être ménagées à travers la première plaque (4) de manière régulière ou irrégulière, en étant alignées ou disposées en quinconce. Selon une variante de réalisation, les découpes (54) sont susceptibles d'être ménagées en alternance dans l'une et dans l'autre des plaques (4,5). Leur position est aussi susceptible d'être relativement quelconque, sans tolérances précises, grâce à la fixation des plaques (4,5) entre elles par soudage d'un bord de la découpe (54) ménagée dans une seule des plaques (4). En outre, aucune pollution n'est induite.

Sur les fig.39 et fig.40, la découpe (56) est ménagée dans l'une des plaques (4,5), en bordure de cette dernière. Un joint de soudure (57), réalisé par apport de matière, est ménagé le long du bord de la découpe (56). Ce joint de soudure (57) est notamment un cordon de soudure réalisé par brasage ou soudobrasage, notamment par brasage LASER à la manière de la variante de réalisation décrite sur les fig.37 et fig.38. La découpe (56) est susceptible de présenter une trajectoire rectiligne, sans inflexion. Cependant, il est préféré de conférer à cette découpe (56) une forme irrégulière, telle que sinusoïdale sur l'exemple de réalisation illustré. Les bords respectifs des plaques (4,5) sont décalés l'un par rapport à l'autre, la distance de séparation entre ces bords étant susceptible d'être indifféremment constante ou variable. Une telle conformation de la découpe (56) permet une bonne tenue en pelage des plaques (4,5) assemblées.

Sur la fig.41, la découpe (56) ménagée dans la plaque (4) présente un retour (56') vers l'extérieur de la plaque (5). Ces dispositions sont telles que la surface de contact entre le joint de soudure (57) et la tôle intérieure (3) de la plaque (4) est optimisée pour améliorer la prise du joint de soudure (57) sur la plaque (4) et finalement favoriser une stabilité du soudage. Selon diverses variantes de réalisation, soit les deux tôles intérieure (3) et extérieure (2) de la plaque (4) sont recourbées, tel qu'illustré sur la fig.41, soit uniquement la tôle intérieure (3) de la plaque (4) présente une inflexion.

Sur les fig.42 et fig.43, les plaques (4,5) sont assemblées entre elles orthogonalement dans leur plan général. L'une des plaques (4) comporte des premières découpes (58) ménagées dans sa tranche, pour former des reliefs d'emboîtement (59). L'autre plaque (5) comporte des deuxièmes découpes (60) de forme complémentaire à la conformation des reliefs (59), en vue de l'emboîtement des plaques (4,5) entre elles. Un joint de soudure (61) est ménagé, notamment par brasage ou soudobrasage LASER, en bordure d'une partie émergeante des reliefs (59) hors des deuxièmes découpes (60) ménagées à travers la plaque correspondante (5). Ce cordon de soudure (61) est en prise sur les tôles extérieures (2) des plaques (4,5). Selon une variante de réalisation illustrée sur la fig.44, deux joints de soudure (62,63) sont réalisés de part et d'autre des débouchés de la découpe (60) ménagée à travers la plaque (5). Ces dispositions offrent une meilleure stabilité de soudage des plaques (4,5) entre elles. L'opération de brasage est notamment réalisée à la manière de la variante de réalisation décrite sur les fig.37 et fig.38.

Bien qu'il ait été illustré un dispositif d'assemblage de deux plaques (4,5) entre elles, il doit être compris que le nombre de plaques (4,5) peut être quelconque. De même, un quelconque autre matériau conditionné en plaque peut être interposé entre les plaques (4,5) à assembler. Par ailleurs, chaque plaque (4,5) est susceptible de comporter une ou plusieurs couches de matériau interposées entre les tôles métalliques (2,3), tel qu'au moins une autre tôle métallique, au moins une autre couche interne de résine, voire au moins un autre matériau.

## Revendications

1. Dispositif d'assemblage entre au moins deux plaques (4,5), l'une au moins de ces plaques (4,5) étant composée d'au moins une couche interne (1) interposée entre deux tôles externes métalliques (2,3), l'autre plaque (4,5) comprenant au moins une tôle métallique (2,3), **caractérisé en ce que** l'une au moins des plaques (4,5) comporte une découpe (6,34,36,41,54,56,58,60) pour le passage de moyens de fixation conjointement en prise sur une tôle (2,3) de l'une des plaques (4,5) et sur une tôle (2,3) de l'autre plaque (4,5).

2. Dispositif d'assemblage selon la revendication 1, **caractérisé en ce que** les moyens de fixation sont constitués d'un organe de poinçonnage (7) formant la découpe (6) et comportant à ses extrémités respectives une tête (8,15,25) d'appui sur la tôle extérieure (2) de l'une des plaques (4,5) et au moins un rabat (9',13',14') contre la tôle extérieure (2) de l'autre plaque (4,5) après traversée des plaques (4,5).

3. Dispositif d'assemblage selon la revendication 2, **caractérisé en ce que** l'organe de poinçonnage (7) est constitué d'un pion (10,14,24) à extrémité perforante, le rabat (9',14') étant formé par un écrasement de la dite extrémité.

4. Dispositif d'assemblage selon la revendication 3, **caractérisé en ce que** l'organe de poinçonnage (7) est évidé, le rabat (14') étant formé par un écrasement vers l'extérieur de l'extrémité perforante.

5. Dispositif d'assemblage selon la revendication 4, **caractérisé en ce que** l'évidement de l'organe de poinçonnage (7) constitue une chambre de réception (18) de la matière des plaques (4,5) découpée et comprimée vers l'intérieur de l'évidement de l'organe de poinçonnage (7).

6. Dispositif d'assemblage selon la revendication 4, **caractérisé en ce que** l'évidement de l'organe de poinçonnage (7) est débouchant à travers la tête d'appui (15), et constitue un couloir (21) d'éjection de la matière découpée des plaques (4,5).

7. Dispositif d'assemblage selon la revendication 2, **caractérisé en ce que** l'organe de poinçonnage (7) est constitué d'une agrafe (13) comportant au moins deux pattes perforantes dont les extrémités sont repliées pour former les rabats (13').

8. Procédé de mise en oeuvre d'un dispositif d'assemblage selon l'une quelconque des revendications 2 à 7, **caractérisé en ce qu'**il consiste à maintenir les plaques (4,5) en position relative de superposition, à positionner l'organe de poinçonnage (7) et à appliquer contre la tête d'appui (8,15) une poussée pour provoquer une traversée perforante des plaques (4,5) par l'organe de poinçonnage (7) et former la découpe (6), puis à écraser au moyen d'un premier outil (12,16) l'extrémité perforante de l'organe de poinçonnage (7) pour former le rabat (9',13',14').

9. Procédé selon la revendication 8, de mise en oeuvre d'un dispositif d'assemblage selon la revendication 5, **caractérisé en ce que** le premier outil (12,16) comporte un relief (19) de mise en compression de la matière découpée des plaques (4,5) contre la face interne de la tête (15).

10. Procédé selon la revendication 8, de mise en oeuvre d'un dispositif d'assemblage selon la revendication 6, **caractérisé en ce qu'**un deuxième outil (23) est équipé d'une tige (22) de traversée du couloir (21) pour l'éjection de la matière découpée des plaques (4,5).

11. Dispositif d'assemblage selon la revendication 1, **caractérisé en ce que** les moyens de fixation sont constitués d'au moins une platine (32,37,42,46) placée en superposition contre une tôle métallique extérieure (2) d'une première plaque (4), cette platine (32,37,42,46) comportant au moins un organe de liaison traversant au moins partiellement la découpe (34,36,41) vers l'une quelconque des tôles métalliques (2,3) d'une deuxième plaque (5), pour sa fixation à cette dernière.

12. Dispositif d'assemblage selon la revendication 11, **caractérisé en ce que** l'organe de liaison est constitué d'une languette (33) issue de la platine (32) par découpage, et rabattue à travers la découpe (34) vers la tôle métallique extérieure (2) de la deuxième plaque (4,5), cette languette (33) comportant un repli (35) de prise d'appui contre la face extérieure de la tôle métallique extérieure (2) de cette plaque (4,5).

13. Dispositif d'assemblage selon la revendication 12, **caractérisé en ce qu'**une platine (32) est placée en superposition contre chacune des plaques (4,5), le repli (35) de la languette (33) de l'une quelconque des platines (32) étant plaquée contre la face extérieure de l'autre platine (32).

14. Dispositif d'assemblage selon la revendication 11, **caractérisé en ce que** l'organe de liaison est constitué d'un relief (39) que comporte la platine (37), qui s'étend partiellement à travers la découpe (36) vers la tôle intérieure (3) de la deuxième plaque (5), les moyens de fixation étant constitués par un joint de soudure (40) entre la tôle intérieure (3) de la deuxième plaque (5) et le fond du relief (39).

15. Dispositif d'assemblage selon la revendication 1, **caractérisé en ce que** les moyens de fixation sont constitués d'organes coopérants en appui contre la tôle métallique extérieure (2) d'une plaque respective (4,5), l'un au moins de ces organes traversant au moins partiellement la découpe (34,36,41) pour sa mise en relation avec l'autre organe.

16. Dispositif d'assemblage selon la revendication 15, **caractérisé en ce que** les organes coopérants sont fixés l'un à l'autre par soudage.

17. Dispositif d'assemblage selon la revendication 16, **caractérisé en ce que** les organes coopérants sont chacun constitués d'un corps épaulé (44,49,50), les épaulements prenant appui contre la face extérieure de la tôle métallique extérieure (2) correspondante, les corps (44,49,50) étant logés au moins partiellement à l'intérieur de la découpe (41) et étant soudés l'un à l'autre.

18. Dispositif d'assemblage selon la revendication 17, **caractérisé en ce que** les organes coopérants sont globalement conformés en cuvette à rebord (44) et sont soudés l'un à l'autre par l'intermédiaire de leur fond.

19. Procédé de mise en oeuvre d'un dispositif d'assemblage selon la revendication 18, **caractérisé en ce qu'**il consiste à ménager préalablement les découpes (41) et à former les organes coopérants à partir de platines (42,46) placées contre une plaque respective (4,5), ces platines (42,46) étant embouties par des électrodes (43) de soudage pour leur mise en conformation en cuvette à rebord (44) et leur soudage l'une à l'autre.

20. Dispositif d'assemblage selon la revendication 17, **caractérisé en ce que** le corps (49) de l'un au moins des organes comporte une surface à portée conique (52) d'appui de l'autre corps (50), cette surface (52) étant une surface intermédiaire de soudage des corps (49,50) l'un à l'autre.

21. Dispositif d'assemblage selon la revendication 20, **caractérisé en ce qu'**un premier corps (49) comporte une première surface à portée conique (52), tandis qu'un deuxième corps (50) comporte une deuxième surface à portée conique complémentaire, qui est formée par écrasement d'une arête (53) du deuxième corps (50) par l'intermédiaire de la première surface conique (52).

22. Procédé de mise en oeuvre d'un dispositif d'assemblage selon la revendication 20, **caractérisé en ce qu'**il consiste à ménager préalablement les découpes (41), et à placer les organes coopérants de part et d'autre des plaques (4,5) en disposant les corps (49,50) au moins partiellement à l'intérieur de la découpe (41), puis à exercer une poussée et contre poussée axiale contre les organes coopérants au moyen d'électrodes pour provoquer la mise en appui des organes coopérants contre la tôle extérieure (2) correspondante et l'écrasement de ladite arrête (53), ainsi que leur soudage l'un à l'autre.

23. Dispositif d'assemblage selon la revendication 16, **caractérisé en ce que** les organes coopérants sont constitués d'un jeu de platines (32) placées en superposition contre une tôle métallique extérieure (2) d'une plaque respective (4,5), ces platines (32) comportant chacune au moins une languette (33) issue des platines (32) par découpage et rabattue à travers la découpe (34) vers une languette (33) de l'autre platine (32), ces languettes (33) comportant un retour (33') d'appui contre le retour (33') de l'autre languette (33), par l'intermédiaire desquels retours (33') les languettes (33) sont soudées l'une à l'autre.

24. Procédé de mise en oeuvre d'un dispositif d'assemblage selon la revendication 23, **caractérisé en ce qu'**il consiste à ménager préalablement les découpes (34), à placer les platines (32) contre la plaque correspondante (4,5), puis à emboutir les platines (32) au moyen d'électrodes pour déformer les languettes (33) et les souder l'une à l'autre.

25. Dispositif d'assemblage selon la revendication 16, **caractérisé en ce que** les organes coopérants sont constitués pour l'un d'un organe de poinçonnage (7) des plaques (4,5) et pour l'autre d'un organe de réception de l'extrémité émergeante hors des plaques (4,5) de l'organe de poinçonnage (7).

26. Dispositif d'assemblage selon la revendication 25, **caractérisé en ce que** l'organe de poinçonnage (7) est constitué d'un pion (24) à tête (25) et à pointe perforante (27), l'organe de réception étant constitué d'une cuvette à rebord (26).

27. Dispositif d'assemblage selon la revendication 26, **caractérisé en ce que** la pointe perforante (27) et la cuvette (26) comportent des surfaces d'appui à portée conique, par l'intermédiaire desquelles le pion (24) et la cuvette (26) sont soudés l'un à l'autre.

28. Dispositif d'assemblage selon l'une quelconque des revendications 4 et 25 à 27, **caractérisé en ce que** l'organe de poinçonnage (7) est axialement évidé, cet évidement constituant un couloir (21) d'éjection de la matière découpée des plaques (4,5).

29. Dispositif d'assemblage selon la revendication 1, **caractérisé en ce que** l'une quelconque au moins des plaques (4,5) comporte la découpe (54,56) ménagée à son travers, les moyens de fixation étant constitués par un joint de soudure (55,57) bordant la périphérie de la découpe (54,56) en reliant l'une à l'autre les tôles métalliques intérieures superposées (3) des plaques (4,5).

30. Dispositif d'assemblage selon la revendication 29, en ce que la découpe (54) est formée d'une lumière ménagée à travers la plaque (4,5).

31. Dispositif d'assemblage selon la revendication 29, en ce que la découpe (56) est ménagée en bordure de l'une des plaques (4,5).

32. Dispositif d'assemblage selon l'une quelconque des revendications 30 et 31, en ce que la conformation du bord de la découpe (54,56) est de forme irrégulière.

33. Dispositif d'assemblage selon l'une quelconque des revendications 29 à 32, **caractérisé en ce que** le bord de la découpe (54,56) comporte un retour (56') ménagé par déformation de la plaque correspondante (4).

34. Dispositif d'assemblage selon la revendication 1, **caractérisé en ce qu'**une première des plaques (4) comporte au moins une découpe (58) ménagée dans sa tranche pour former au moins un relief (59) d'emboîtement à l'intérieur d'une découpe (60) ménagée à travers une deuxième plaque (5), les moyens de fixation étant constitués d'au moins un joint de soudure (61,62,63) réalisé en bordure d'une partie du relief (59) qui émerge hors de la découpe (60) ménagée à travers la deuxième plaque (5).

35. Dispositif d'assemblage selon la revendication 34, **caractérisé en ce que** les joints de soudure (62,63) sont ménagés le long de chacun des débouchés de la découpe (60).

36. Dispositif d'assemblage selon l'une quelconque des revendications précédentes, **caractérisé en ce que** la couche interne (1) est réalisée à partir d'un matériau électriquement isolant.

37. Dispositif d'assemblage selon l'une quelconque des revendications précédentes, **caractérisé en ce que** l'une des plaques (4,5) est constituée d'une tôle métallique monolithique.

38. Dispositif d'assemblage selon l'une quelconque des revendications 1 à 36, **caractérisé en ce qu'**au moins une des plaques (4,5) comprend une tôle métallique (2) unique extérieure.
